# EUROPÄISCHE PATENTSCHRIFT

(11) **EP 2 512 899 B1**
(45) Veröffentlichungstag und Bekanntmachung des Hinweises auf die Patenterteilung: **15.01.2014**
(21) Anmeldenummer: 10779450.5
(22) Anmeldetag: 05.11.2010
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 16.12.2009 DE 102009059159
(43) Veröffentlichungstag der Anmeldung: 24.10.2012
(73) Patentinhaber: ThyssenKrupp Presta Aktiengesellschaft, 9492 Eschen (LI)
(72) Erfinder: SULSER, Hansjörg, FL-9487 Gamprin (LI); HUBER, Sebastian, A-6811 Göfis (AT)
(74) Vertreter: Hofmann, Ralf U.
(86) Internationale Anmeldenummer: PCT/AT2010/000420
(87) Internationale Veröffentlichungsnummer: WO 2011/072311

(56) Entgegenhaltungen:
- DE-B3-102008 034 807

## Beschreibung

Die Erfindung bezieht sich auf eine Lenksäule für ein Kraftfahrzeug, welche eine Manteleinheit, die eine Lenkwelle um ihre Längsachse drehbar lagert und ein Rückhalteteil umfasst, gegenüber dem die Manteleinheit bis zu einem Grenzwert einer parallel zur Längsachse der Lenkwelle in Richtung zur Fahrzeugfront auf die Manteleinheit einwirkenden Kraft unverschiebbar gehalten ist und bei einem Überschreiten des Grenzwertes parallel zur Längsachse in Richtung zur Fahrzeugfront verschiebbar ist, wobei die Manteleinheit mit dem Rückhalteteil zum Einen über eine Energieabsorptionsverbindung, die mindestens einen Biegedraht oder streifen umfasst, der bei einer parallel zur Längsachse in Richtung zur Fahrzeugfront erfolgenden Verschiebung der Manteleinheit gegenüber dem Rückhalteteil verformt wird, und zum Anderen über eine Losbrechverbindung verbunden ist, die bis zum Grenzwert der Kraft geschlossen ist und eine Verschiebung der Manteleinheit gegenüber dem Rückhalteteil blockiert und sich bei Überschreiten des Grenzwertes der Kraft öffnet. Weiters bezieht sich die Erfindung auf ein Verfahren zur Herstellung einer derartigen Lenksäule.

Lenksäulen für Kraftfahrzeuge werden meist verstellbar ausgebildet, so dass die Position des Lenkrades an die Sitzposition des Fahrers anpassbar ist. Solche verstellbaren Lenksäulen sind in unterschiedlichen Ausführungsformen bekannt. Neben verstellbaren Lenksäulen, die nur in die Längen- oder Höhen- bzw. Neigungsrichtung verstellbar sind, sind sowohl in die Längen- als auch Höhen- bzw. Neigungsrichtung verstellbare Lenksäulen bekannt.

Bei Lenksäulen für Kraftfahrzeuge ist es als Sicherheitsmaßnahme im Falle eines Fahrzeugcrashes bekannt und üblich, die Lenkwelle zusammen mit einer die Lenkwelle drehbar lagernden Manteleinheit in einem an das lenkradseitige Ende anschließenden Abschnitt unter Energieaufnahme in Längsrichtung der Lenksäule (= parallel zur Längsachse der Lenkwelle) verschiebbar auszubilden. Eine übliche Ausbildungsform sieht hierfür vor, dass eine Trageinheit, gegenüber der im geöffneten Zustand des Spannmechanismus die Manteleinheit zur Einstellung der Position der Lenksäule verstellbar ist, derart mit einem am Fahrzeugchassis angebrachten Montageteil verbunden ist, dass die Manteleinheit in energieaufzehrender Weise gegenüber dem Montageteil verschiebbar ist. Eine derartige Konstruktion zeigt beispielsweise die US 5,517,877 A.

Aus der DE 28 21 707 A1 ist eine nicht verstellbare, Lenksäule bekannt geworden, bei der das die Lenkwelle drehbar lagernde Mantelrohr beidseitig abstehende Flügel aufweist, die mittels Befestigungsblocks und diese durchsetzende Schrauben am Chassis verbunden ist. Im Crashfall können sich die Flügel von den Befestigungsblocks lösen, wodurch eine Verschiebung des Mantelrohrs ermöglicht wird. Hierbei sind zwischen den Befestigungsblocks und den Flügeln U-förmige Biegestreifen vorgesehen, an denen bei der Verschiebung des Mantelrohrs Verformungsarbeit geleistet wird. Die Biegestreifen sind in Kammern der Flügel eingeschlossen und liegen an einander gegenüberliegenden Seitenwänden der Kammer an, sodass der Rollradius des jeweiligen Biegestreifens bei seiner Verformung begrenzt und vorgegeben wird.

Eine verstellbare Lenksäule, die eine die Lenkwelle drehbar lagernde Manteleinheit und eine Trageinheit umfasst, gegenüber der die Manteleinheit im geöffneten Zustand einer Feststelleinrichtung zur Einstellung der Position der Lenksäule zumindest in Längsrichtung der Lenksäule verstellbar ist, geht aus der EP 0 598 857 B1 hervor. Im Crashfall kann sich die Manteleinheit gegenüber der Trageinheit bzw. einem Spannbolzen der Feststelleinrichtung in Längsrichtung der Lenksäule verschieben. Zur Energieabsorption sind mit der Manteleinheit mitgenommene und um den Spannbolzen gelegte Biegestreifen bzw. Biegedrähte vorhanden, welche verformt werden. Ein Nachteil dieser Lösung besteht darin, daß der mögliche Verschiebeweg bzw. die Charakteristik der Energieabsorption bei dieser Einrichtung von der jeweils eingestellten Länge der Lenksäule abhängen.

Aus der US 5,961,146 A ist weiters eine im Normalbetrieb nur in die Höhenrichtung verstellbare Lenksäule bekannt. In ähnlicher Weise wie zuvor beschrieben ist ein um den Spannbolzen der Feststelleinrichtung U-förmig gebogener Biegedraht vorhanden, der im Crashfall von der sich gegenüber dem Spannbolzen in Längsrichtung der Lenksäule verschiebenden Manteleinheit mitgenommen wird, wobei Biegearbeit geleistet wird.

Bei der aus der WO 2007/048153 A2 bekannten Lenksäule wird im geschlossenen Zustand der Feststelleinrichtung ein Rückhalteteil durch ein Feststellteil der Feststelleinrichtung an einer Verschiebung gegenüber diesem Feststellteil bezogen auf die Richtung parallel zur Lenkwelle gehindert. Die Manteleinheit kann sich gegenüber dem Rückhalteteil unter Energieabsorption in Längsrichtung der Lenksäule verschieben. Zur Energieabsorption dient ein am Rückhalteteil angebrachter Bolzen, der in ein Langloch eines an der Manteleinheit angeordneten Energieabsorptionsteils ragt und bei seiner Verschiebung im Crashfall dieses Langloch aufweitet. Um eine definierte Energieabsorption zu erreichen, müssen die Materialeigenschaften des Energieabsorptionsteils im Bereich des Langlochs in reproduzierbarer Weise genau festgelegt sein.

Ähnliche Lenksäulen sind auch aus der EP 0 849 141 A1 und EP 1 464 560 A2 bekannt. Die Rückhalteteile sind nach Art eines Schlittens von Führungsteilen in Längsrichtung der Lenksäule verschiebbar geführt, wobei sie gegenüber den Führungsteilen reibschlüssig gehalten sind oder diese unter Energieverzehrung plastisch verformen. Bei einer reibschlüssigen Halterung geht die Spannkraft der Feststelleinrichtung in das Ausmaß der Energieabsorption ein und bei einer plastischen Verformung der Führungsteile müssen deren Materialeigenschaften in genau definierter Weise reproduzierbar ausgebildet sein.

Eine Lenksäule der eingangs genannten Art geht aus der DE 10 2008 034 807 B3 hervor. Das Rückhalteteil ist mit der Manteleinheit zu Einem über einen Biegedraht oder-streifen und zum Anderen über einen Stift, der eine Losbrechverbindung zwischen dem Rückhalteteil und der Manteleinheit bildet, verbunden. Wenn im Crashfall eine auf das lenkradseitige Ende der Lenkwelle parallel zur Längsachse der Lenkwelle in Richtung zur Fahrzeugfront einwirkende Kraft einen Grenzwert überschreitet, so wird der Stift abgeschert und die Losbrechverbindung somit geöffnet. Daraufhin kann sich die Manteleinheit gegenüber dem Rückhalteteil parallel zur Längsachse der Lenkwelle in Richtung zur Fahrzeugfront verschieben, wobei der Biegedraht oder -streifen verformt wird und dadurch Energie absorbiert wird. Das Rückhalteteil wird hierbei an einer Verschiebung in Richtung parallel zur Längsachse der Lenkwelle durch seinen Eingriff mit seinem Feststellteil der Feststelleinrichtung gehindert. Im geöffneten Zustand der Feststelleinrichtung ist das Feststellteil vom Rückhalteteil abgehoben und die Manteleinheit zusammen mit dem Rückhalteteil können parallel zur Längsachse der Lenkwelle verschoben werden, um eine Längeneinstellung der Lenksäule durchzuführen. Weiters ist im geöffneten Zustand der Feststelleinrichtung eine Höhen- bzw. Neigungsverstellung der Lenksäule möglich.

Ein Nachteil bei dieser vorbekannten Lenksäule besteht darin, dass beim Öffnen der Losbrechverbindung eine Kraftspitze (=ein Losbrechpeak) auftritt, d. h. der Grenzwert der parallel zur Längsachse der Lenkwelle einwirkenden Kraft, ab dem sich die Losbrechverbindung öffnet und eine energieabsorbierende Verschiebung der Manteleinheit gegenüber dem Rückhalteteil einsetzt, ist relativ hoch. Nach Öffnen der Losbrechverbindung ist die der Verschiebung der Manteleinheit gegenüber dem Rückhalteteil entgegenwirkende Kraft geringer.

Aufgabe der Erfindung ist es, diese Kraftspitze (=der Losbrechpeak) zumindest zu verringern, dies bei einer einfachen und kostengünstigen, aber dennoch funktionell vorteilhaften Ausbildung.

Erfindungsgemäß gelingt dies durch eine Lenksäule mit den Merkmalen des Anspruchs 1 beziehungsweise durch ein Verfahren zur Herstellung einer Lenksäule mit den Merkmalen des Anspruchs 10. Aus den abhängigen Ansprüchen gehen vorteilhafte Weiterbildungen hervor.

Bei der Lenksäule der Erfindung wird eine elastische Vorspannung auf den mindestens einen Biegedraht oder -streifen aufgebracht. Dadurch wird die Manteleinheit gegenüber dem Rückhalteteil in die parallel zur Längsachse der Lenkwelle liegende Verschieberichtung in Richtung zur Fahrzeugfront vorgespannt. Diese Vorspannung wirkt auf die Losbrechverbindung zwischen der Manteleinheit und dem Rückhalteteil. Die im Crashfall erforderliche Kraft, um die Losbrechverbindung zu öffnen, wird dadurch verringert, da sich die elastische Rückstellkraft des mindestens einen Biegedrahts oder -streifens und die, insbesondere durch die sekundäre Kollision des Fahrers mit dem Lenkrad, parallel zur Längsachse der Lenkwelle in Richtung zur Fahrzeugfront ausgeübte Kraft addieren. Die Kraftspitze beim Losbrechen der Manteleinheit vom Rückhalteteil (=der Losbrechpeak) kann dadurch verringert oder völlig vermieden werden. Dennoch ist im normalen Fahrbetrieb, also wenn kein Fahrzeugcrash auftritt, eine ausreichend stabile Verbindung zwischen dem Rückhalteteil und der Manteleinheit gegeben, durch welche ein Wackeln zwischen der Manteleinheit und dem Rückhalteteil und Vibrationen durch Eigenresonanzen vermieden werden können, dies bei einer sehr einfachen Ausbildung.

Vorzugsweise ist die Lenksäule zumindest in der Länge einstellbar ausgebildet. Hierbei ist eine öffen- und schließbare Feststelleinrichtung vorgesehen, in deren geöffnetem Zustand die Manteleinheit gegenüber einer die Manteleinheit tragenden Trageinheit parallel zur Längsachse der Lenkwelle verstellbar ist und die in ihrem geschlossenen Zustand eine Feststellkraft zur Feststellung der Manteleinheit gegenüber der Trageinheit bezüglich einer Verstellung parallel zur Längsachse der Lenkwelle aufbringt. Die Trageinheit ist hierbei im Montagezustand der Lenksäule zumindest im Normalbetrieb, also solange kein Crash auftritt, d. h. bis zu einer maximalen in Richtung der Längsachse der Lenkwelle wirkenden Kraft, fahrzeugfest gehalten.

Eine vorteilhafte Ausführungsform der Erfindung sieht vor, dass das Rückhalteteil von einem Teil der Feststelleinrichtung gebildet wird. Hierbei steht das Rückhalteteil im geschlossenen Zustand der Feststelleinrichtung mit einem Feststellteil in Eingriff, welches gegenüber der Trageinheit in Richtung der Längsachse der Lenkwelle unverschiebbar festgelegt ist. Durch diesen Eingriff zwischen dem Feststellteil und dem Rückhalteteil wird zumindest ein Teil der die Manteleinheit im geschlossenen Zustand der Feststelleinrichtung gegen eine Verschiebung parallel zur Längsachse der Lenkwelle sichernden Feststellkraft aufgebracht. Im geöffneten Zustand der Feststelleinrichtung sind das Rückhalteteil und das Feststellteil außer Eingriff. Die Energieabsorptionseinrichtung zur Ermöglichung der energieabsorbierenden Verschiebung der Manteleinheit im Crashfall ist aber in die Feststelleinrichtung integriert. In dieser Ausführungsform der Erfindung kann eine fahrzeugfeste Montage der Trageinheit vorgesehen sein. Eine weitere energieabsorbierende Verschiebbarkeit zwischen der Trageinheit und einem diese parallel zur Längsachse der Lenkwelle verschiebbar lagernden, fahrzeugfest zu montierenden Montageteil, kann somit entfallen.

Da in dieser Ausführungsform der Erfindung das Feststellteil, bezogen auf die Richtung der Längsachse der Lenkwelle unverschiebbar gegenüber der Trageinheit ist und das Rückhalteteil sich bei der Verstellung der Manteleinheit gegenüber der Trageinheit im geöffneten Zustand der Feststelleinrichtung mit der Manteleinheit mitbewegt, kommen also das Feststellteil und das Rückhalteteil bei unterschiedlichen Längeneinstellungen der Lenksäule in unterschiedlichen Stellungen in gegenseitige Anlage, wenn die Feststelleinrichtung geschlossen wird. Im geschlossenen Zustand der Feststelleinrichtung ist der Verschiebung des Rückhalteteils gegenüber dem Feststellteil (in Richtung parallel zur Längsachse der Lenkwelle) durch, vorzugsweise formschlüssig, zusammenwirkende Feststellelemente, vorteilhafterweise durch zusammenwirkende Verzahnungen, entgegengewirkt. Die Feststellung der Manteleinheit im geschlossenen Zustand der Feststelleinrichtung gegenüber einer Verstellung in die Längenverstellrichtung erfolgt somit zumindest auch über das Zusammenwirken des Feststellteils mit dem Rückhalteteil. Zusätzliche, beispielsweise reibschlüssig wirkende, Feststellelemente zur Feststellung der Manteleinheit gegenüber einer Verstellung in die Längenverstellung im geschlossenen Zustand der Feststelleinrichtung können vorhanden sein.

Besonders bevorzugt ist auch die Höhe bzw. Neigung der Lenksäule im geöffneten Zustand der Feststelleinrichtung einstellbar.

Im Crashfall wird nach Öffnen der Losbrechverbindung bei der Verschiebung der Manteleinheit gegenüber dem Rückhalteteil (welches gegenüber der Feststelleinheit in Richtung parallel der Längsachse der Lenkwelle unverschiebbar gehalten ist) zumindest ein Abschnitt des mindestens einen Biegedrahts oder -streifens von der Manteleinheit mitgenommen. Die Verformung des Biegedrahts oder-streifens erfolgt durch Biegung des Biegedrahts oder-streifens oder umfasst zumindest eine solche. Günstigerweise weist der Biegedraht oder-streifen zwei über eine Umbiegung verbundene Schenkel auf, wobei die beiden Schenkel zueinander einen Winkel insbesondere im Bereich von 150° bis 220°, vorzugsweise einen Winkel von 180°, miteinander einschließen, so dass sich eine U-förmige Ausbildung des Biegedrahts oder -streifens ergibt.

Eine vorteilhafte Ausbildung sieht hierbei vor, dass der Biegedraht oder -streifen zumindest teilweise in einem Gehäuse eingeschlossen ist, welches vorzugsweise von einem Teil der Manteleinheit gebildet wird. Insbesondere ist hierzu eine im Querschnitt U-förmige Schiene an einem die Lenkwelle drehbar lagernden Mantelrohr festgelegt. Auch eine Ausbildung des Gehäuses oder eines Teils von diesem an der beziehungsweise von der Trageinheit ist denkbar und möglich.

Die Losbrechverbindung zwischen dem Rückhalteteil und der Manteleinheit kann beispielsweise durch einen diese beiden Teile verbindenden Stift gebildet werden, der im Crashfall bei Überschreiten des Grenzwertes der auf die Lenkwelle und über diese auf die Manteleinheit parallel zur Längsachse der Lenkwelle in Richtung zur Fahrzeugfront einwirkenden Kraft abgeschert wird. Auch andere Arten von formschlüssigen Verbindungen, die im Crashfall durch Materialumformung, Materialabscherung oder Bruch gelöst werden, sind denkbar und möglich. Eine Losbrechverbindung kann beispielsweise auch durch eine Reibschlussverbindung erreicht werden, welche bei Überschreiten des Grenzwertes der Kraft eine Verschiebung der Manteleinheit gegenüber dem Rückhalteteil ermöglicht und nur über einen kleinen ersten Abschnitt des Verschiebewegs wirkt. Als Losbrechverbindung ist somit jede Verbindung zwischen der Manteleinheit und dem Rückhalteteil anzusehen, die nach einer Verschiebung über einen kleinen Verschiebeweg zwischen der Manteleinheit und dem Rückhalteteil (parallel zur Längsachse), der vorzugsweise weniger als zwei Zentimeter beträgt, einer weiteren Verschiebung zwischen der Manteleinheit und dem Rückhalteteil keine oder nur eine wesentlich geringere als die anfängliche Kraft, vorzugsweise weniger als ein Zehntel der anfänglichen Kraft entgegensetzt.

Entsprechend ist auch eine Lötverbindung oder Schweißverbindung oder Klebverbindung als Losbrechverbindung geeignet, wenn sie so ausgelegt ist, dass sie bei einer Überschreitung der gewünschten Kraft aufgetrennt wird.

Weitere Vorteile und Einzelheiten der Erfindung werden im Folgenden anhand der beiliegenden Zeichnungen erläutert. In diesen zeigen:
- Fig. 1: eine Seitenansicht einer Lenksäule gemäß einem ersten Ausführungsbeispiel der Erfindung;
- Fig. 2: einen Schnitt entlang der Linie BB von Fig. 1;
- Fig. 3: einen Schnitt entlang der Linie AA von Fig. 1;
- Fig. 4: eine Schrägsicht der Lenksäule von Fig. 1;
- Fig. 5: eine Schrägsicht der Manteleinheit, des von ihr drehbar gelagerten Abschnitts der Lenkwelle und des Rückhalteteils;
- Fig. 6: einen Schnitt entsprechend der Linie CC von Fig. 2, wobei aber die Trageinheit, die Zwischeneinheit und die Feststelleinrichtung, abgesehen vom mit dem Rückhalteteil in Eingriff stehenden (geschnitten dargestellten) Feststellteil weggelassen sind;
- Fig. 7a: einen Schnitt entlang der Linie EE von Fig. 2, während der Montage der Lenksäule, die im Zusammenhang mit Fig. 6 genannten Teile wiederum weggelassen;
- Fig. 7b: einen Schnitt analog Fig. 7a im fertig gestellten Zustand der Lenksäule;
- Fig. 8: einen Schnitt analog den Fig. 7a und 7b nach einem Fahrzeugcrash;
- Fig. 9: eine Explosionsdarstellung der Manteleinheit, des Rückhalteteils und der diese verbindenden Verbindungsteile gemäß einer zweiten Ausführungsform der Erfindung;
- Fig. 10: eine Schrägsicht auf die in Fig. 9 nicht sichtbare Rückseite des Rückhalteteils;
- Fig. 11a: eine Ansicht auf die in Fig. 9 nicht sichtbare Rückseite der am Mantelrohr angebrachten Schiene der Manteleinheit im verbundenen Zustand mit dem Rückhalteteil, in einem Zustand während der Montage der Lenksäule;
- Fig. 11b: eine Ansicht entsprechend Fig. 11a nach einem weiteren Montageschritt;
- Fig. 11c: eine Ansicht entsprechend Fig. 11a im fertig gestellten Zustand der Lenksäule.

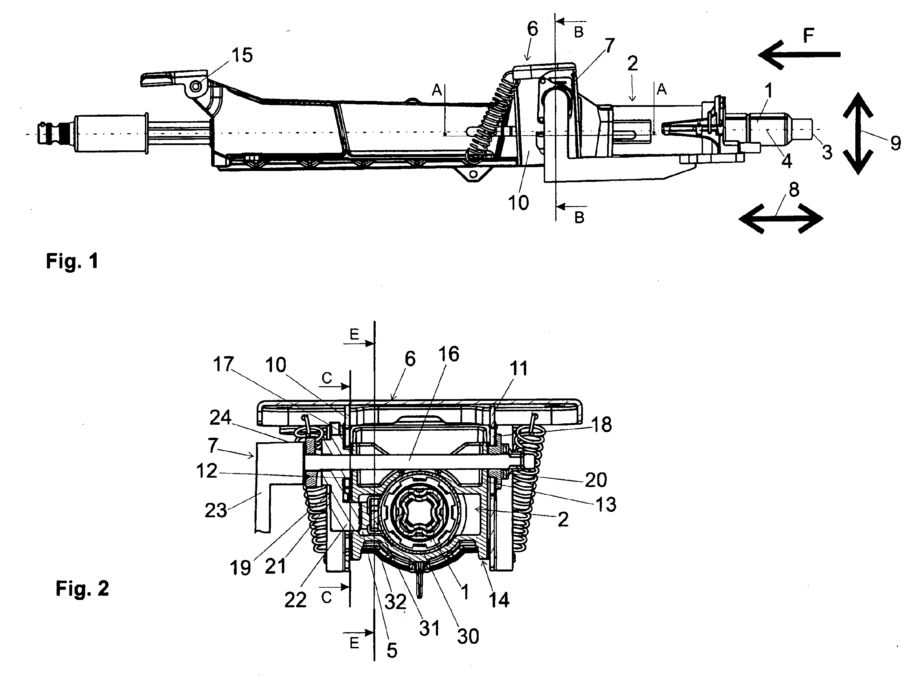

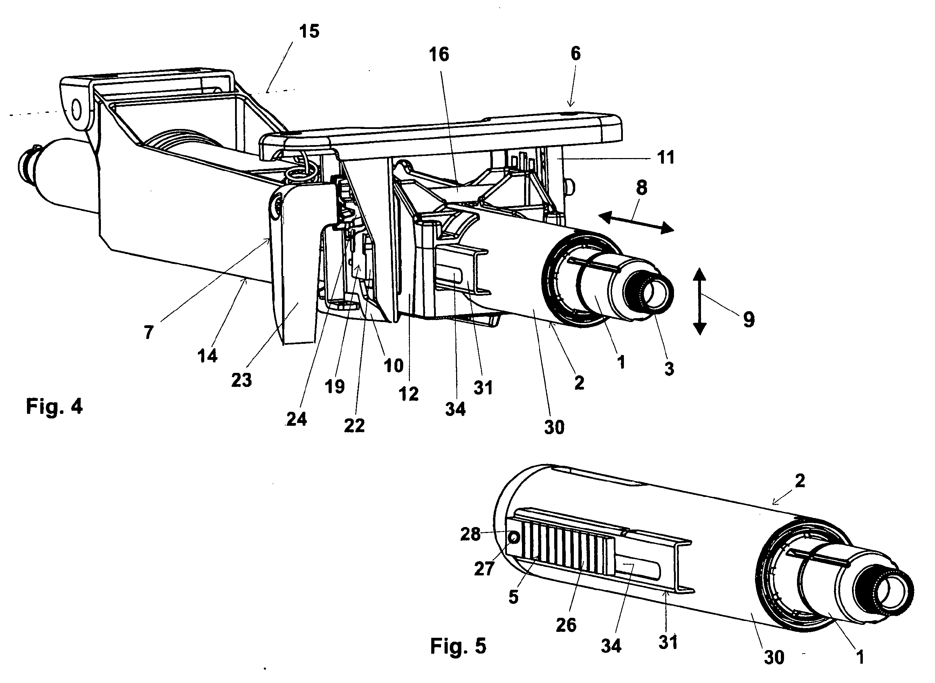

Ein erstes Ausführungsbeispiel der Erfindung ist in den Fig. 1 bis 8 dargestellt. Die Lenksäule umfasst eine Manteleinheit 2, welche eine Lenkwelle 1 drehbar um die Längsache 4 der Lenkwelle 1 lagert, die ein lenkradseitiges Ende 3 aufweist, welches zum Anschluss eines in den Figuren nicht dargestellten Lenkrades dient. Die Manteleinheit 2 ist über eine weiter unten genauer beschriebene Losbrechverbindung und Energieabsorptionsverbindung mit einem Rückhalteteil 5 verbunden. Bis zu einem Grenzwert einer zwischen der Manteleinheit und dem Rückhalteteil 5 parallel zur Längsachse 4 wirkenden Kraft ist das Rückhalteteil 5 mit der Manteleinheit 2 bezogen auf die Richtung der Längsachse 4 unverschiebbar verbunden. Der Grenzwert kann hierbei für die beiden Richtungen parallel zur Längsachse 4 gleich oder unterschiedlich sein und bei der Konstruktion des Systems eingestellt werden.

Eine im Crashfall durch die sekundäre Kollision des Fahrers auf die Manteleinheit 2 ausgeübte Kraft F (bzw. die entsprechende Kraftkomponente parallel zur Längsachse 4) weist zur Fahrzeugfront hin, wie dies in Fig. 1 veranschaulicht ist, und wird entsprechend durch eine Gegenkraft an der Trageinheit 6 aufgenommen.

Eine die Manteleinheit 2 tragende Trageinheit 6 ist im Betriebszustand der Lenksäule starr mit dem Chassis des Kraftfahrzeuges verbunden. Im geöffneten Zustand einer Feststelleinrichtung 7 kann die Lenksäule in der Länge und in der Höhe bzw. Neigung verstellt werden. Hierbei ist die Manteleinheit 2 gegenüber der Trageinheit 6 parallel zur Längsachse 4 (=Längenverstellrichtung 8) und in eine rechtwinklig hierzu stehende Höhe- bzw. Neigungsverstellrichtung 9 gegenüber der Trageinheit 6 verstellbar. Im geschlossenen Zustand der Feststelleinrichtung 7 wird eine Feststellkraft zur Feststellung der Manteleinheit 2 bezüglich einer parallel zur Längsachse 4 erfolgenden Verschiebung gegenüber der Trageinheit 6 aufgebracht, wobei die Feststellkraft zumindest bezüglich einer Verschiebung parallel zur Längsachse 4 in Richtung zur Fahrzeugfront höher als der Grenzwert der Kraft ist, bis zu der die Manteleinheit 2 gegenüber dem Rückhalteteil 5 unverschiebbar gehalten ist. Weiters wird von der Feststelleinrichtung 7 eine Feststellkraft zur Feststellung der Manteleinheit 2 gegen eine Verstellung gegenüber der Trageinheit 6 in die Höhen- bzw. Neigungsverstellrichtung 9 aufgebracht.

Im gezeigten Ausführungsbeispiel ist die Manteleinheit 2 zwischen Seitenwangen 10, 11 der Trageinheit 6 angeordnet. Zwischen den Seitenwangen 10, 11 der Trageinheit 6 und der Manteleinheit 2 liegen weiters Seitenschenkel 12, 13 einer Zwischeneinheit 14, die die Manteleinheit 2 zumindest über einen Großteil ihres Umfangs umgibt. Die Zwischeneinheit 14 ist im geöffneten Zustand der Feststelleinrichtung 7 gegenüber der Trageinheit 6 in die Höhen- bzw. Neigungsverstellrichtung 9 verstellbar. Hierzu ist sie um eine Schwenkachse 15 gegenüber der Trageinheit 6 verschwenkbar. Die Zwischeneinheit 14 ist mit der Trageinheit 6, bezogen auf die Richtung der Längsachse 4 unverschiebbar verbunden, beispielsweise (auch) über die Ausbildung dieser Schwenkachse 15. Die Manteleinheit 2 ist im geöffneten Zustand der Feststelleinrichtung 7 gegenüber der die Manteleinheit 2 verschiebbar führenden Zwischeneinheit 14 parallel zur Längsachse 4 verschiebbar und im geschlossenen Zustand der Feststelleinrichtung 7 durch die von der Feststelleinrichtung 7 aufgebrachte Feststellkraft in Richtung der Längsachse 4 unverschiebbar gegenüber der Zwischeneinheit 14 gehalten.

Die Feststelleinrichtung 7 umfasst einen rechtwinklig zur Längsachse 4 sich erstreckenden Spannbolzen 16, der Öffnungen 17, 18 (vergleiche Fig. 2) in den Seitenwangen 10, 11 durchsetzt, die als in Richtung der Höhen- bzw. Neigungsverstellung 9 verlaufende Langlöcher ausgebildet sind und in denen sich der Spannbolzen 16 bei der Höhe- bzw. Neigungsverstellung der Lenksäule verschiebt. Von den Rändern dieser Öffnungen 17, 18 wird der Spannbolzen 16, bezogen auf die Richtung der Längsachse 4 gegenüber der Trageinheit 6 unverschiebbar gehalten. Der Spannbolzen 16 durchsetzt weiters Öffnungen in den Seitenschenkeln 12, 13 der Zwischeneinheit 11, deren Durchmesser abgesehen von einem Gleitspiel dem des Spannbolzens 16 entsprechen.

Auf dem Spannbolzen 16 sind beidseitig der Seitenwangen 10, 11 der Trageinheit 6 Feststellteile 19, 20 angeordnet, die vom Spannbolzen 16 durch Öffnungen durchsetzt werden und in Richtung der Achse des Spannbolzen 16 axial verschiebbar sind. Das eine Feststellteil 19 besitzt einen Abschnitt, in welchem es vom Spannbolzen 16 durchsetzt wird und einen über einen Verbindungsabschnitt 21 mit diesem verbundenen Abschnitt 22, in welchem es, wie weiter unten beschrieben, mit dem Rückhalteteil 5 zusammenwirkt. Das Feststellteil 20 und das Feststellteil 19 im Bereich seines vom Spannbolzen 16 durchsetzten Abschnittes werden im geschlossenen Zustand der Feststelleinrichtung an die Seitenwangen 10, 11 der Trageinheit 6 angedrückt, um die Verstellung der Lenksäule in die Höhen- bzw. Neigungsverstellrichtung festzustellen. Diese Feststellung kann durch Reibschluss erfolgen. Auch formschlüssig zusammenwirkende Elemente, beispielsweise Verzahnungen können vorgesehen sein.

Zur Verspannung der Feststellteile 19, 20 mit den Seitenwangen 10, 11 und des Feststellteils 19 mit dem Rückhalteteil 5 kann die Feststelleinrichtung 7 in herkömmlicher Weise ausgebildet sein. Beispielsweise ist ein zum Öffnen und Schließen der Feststelleinrichtung 7 dienender Spannhebel 23 mit einer Nockenscheibe 24 verbunden, die er bei einer Verdrehung um die Achse des Spannbolzens 16 mitnimmt und die mit einer Kulissenscheibe zusammenwirkt. Die Kulissenscheibe ist hier einteilig mit dem Feststellteil 19 ausgebildet, es könnte aber auch eine separate Kulissenscheibe vorhanden sein. Auch Anordnungen mit Wälzkörpern oder andere Ausbildungen von Spannmechanismen sind einsetzbar.

Der Abschnitt 22 des Feststellteils 19 durchsetzt eine Öffnung in der Seitenwange 10 (die Seitenwange 10 könnte auch oberhalb des Abschnitts 22 des Feststellteils 19 enden) und eine Öffnung im Seitenschenkel 12 der Zwischeneinheit 14. Im geschlossenen Zustand der Feststelleinrichtung ist der Abschnitt 22 mit einer an ihm angeordneten Verzahnung 25 an eine Verzahnung 26 des Rückhalteteils 5 angedrückt. Je nach der Längeneinstellung der Lenksäule kommen die Verzahnungen 25, 26 in unterschiedlichen Positionen in gegenseitige Anlage.

Der Abschnitt 22 des Feststellteils 19, der als Ganzes auf einer Seite des Spannbolzens 16 liegt, ist gegen eine Verschiebung gegenüber der Trageinheit 6 in Richtung parallel zur Längsachse 4 von den Rändern der durchsetzten Öffnung in der Seitenwange 10 und/oder von den Rändern der durchsetzten Öffnung im Seitenschenkel 12 der Zwischeneinheit 14 unverschiebbar gehalten.

Durch die zusammenwirkenden Verzahnungen 25, 26 wird das Rückhalteteil 5 im geschlossenen Zustand der Feststelleinrichtung 7 gegen eine Verschiebung gegenüber dem Feststellteil 19 in Richtung der Längsachse 4 festgestellt. Falls beim Schließen der Feststelleinrichtung 7 diese beiden Verzahnungen in einer Zahn-Auf-Zahn-Stellung in gegenseitige Anlage gelangen, so wird zumindest nach einer geringfügigen anfänglichen Verschiebung (die kleiner als der Zahnabstand der Verzahnung ist) eine weitere Verschiebung des Rückhalteteils 5 gegenüber dem Feststellteil 19 blockiert.

Auch andere formschlüssige Verbindungen zwischen dem Feststellteil 19 und dem Rückhalteteil 5 sind möglich, beispielsweise über in Löcher eingreifende Bolzen.

Im geöffneten Zustand der Feststelleinrichtung 7 ist das Feststellteil 19 vom Rückhalteteil 5 zurückgezogen und diese beiden Teile sind außer Eingriff gebracht, wobei die Manteleinheit 2 zusammen mit dem Rückhalteteil 5 in die Längenverstellrichtung 8 verstellbar ist.

Die bisher beschriebenen Elemente der Lenksäule, abgesehen von der Art der Ausbildung der Verbindung zwischen der Manteleinheit 2 und dem Rückhalteteil 5, welche im Folgenden genauer beschrieben wird, können in einer aus dem vorbekannten Stand der Technik bekannten Weise ausgebildet sein, insbesondere entsprechend der in der Beschreibungseinleitung genannten DE 10 2008 034 807 B3.

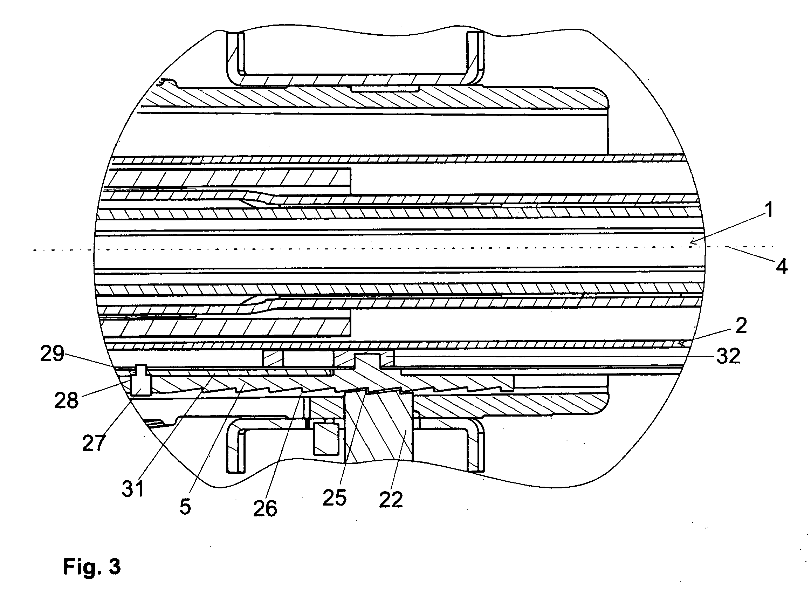

Das Rückhalteteil 5 ist gegenüber der Manteleinheit 2 parallel zur Längsachse 4 verschiebbar geführt und mit der Manteleinheit 2 zum einen über eine Losbrechverbindung und zum anderen über eine Energieabsorptionsverbindung verbunden. Die Losbrechverbindung kann beispielsweise über einen Scherbolzen 27 erfolgen. Im gezeigten Ausführungsbeispiel ist der Scherbolzen 27 einerseits in eine Öffnung 28 im Rückhalteteil 5, andererseits in eine Öffnung 29 eingesetzt (vgl. Fig. 3). Die Manteleinheit 2 umfasst in diesem Ausführungsbeispiel ein Mantelrohr 30 und eine starr mit diesem verbundene, beispielsweise durch Verschweißung, und in Richtung der Längsachse 4 sich erstreckende Schiene 31 mit U-förmigem Querschnitt. Die Öffnung 29 ist hierbei in der Schiene 31 ausgebildet.

Zur Ausbildung der Energieabsorptionsverbindung dient ein Biegedraht oder -streifen 32, der einerseits mit dem Rückhalteteil 5, andererseits mit der Manteleinheit 2 verbunden ist. Der Biegedraht oder -streifen 32 ist im gezeigten Ausführungsbeispiel U-förmig ausgebildet, wobei der eine U-Schenkel mit dem Rückhalteteil 5 und der andere U-Schenkel mit der Manteleinheit 2, speziell mit der Schiene 31 verbunden ist. Die Verbindungen der U-Schenkel sind jeweils so, dass sie in beide Richtungen parallel zur Längsachse 4 wirken, vorzugsweise durch Formschluss. Vorzugsweise erstrecken sich die beiden U-Schenkel zumindest im Wesentlichen parallel zur Längsachse 4.

Zur Verbindung des einen U-Schenkels mit dem Rückhalteteil 5 kann dieses beispielsweise einen Stift 33 aufweisen, der durch einen parallel zur Längsache 4 verlaufenden Schlitz 34 in der Schiene 31 ragt und in eine Öse 35 im Biegedraht oder -streifen 32 eingreift. Die Verbindung des anderen U-Schenkels mit der Manteleinheit 2 kann beispielsweise durch Anlage des Endes des U-Schenkels an einem Anschlag 36 der Schiene und durch in Vertiefungen im U-Schenkel eingreifende Fortsätze 37 der Schiene ausgebildet werden.

Der Biegedraht oder-streifen 32 ist im Ausführungsbeispiel in einem Innenraum eines Gehäuses eingeschlossen, dass von der Schiene 31 und dem diese abschließenden Abschnitt des Mantelrohrs 30 gebildet wird. In diesem Gehäuse erfolgt die Biegung des Biegedrahts oder-streifens 32 frei, also nicht um einen Stift herum.

Bei der Montage der Lenksäule wird der Biegedraht oder -streifen elastisch verformt, d. h. er wird gegenüber einer Neutralstellung, die er ohne äußere Kräfte einnimmt, verformt, wobei er eine Rückstellkraft in Richtung der Neutralstellung ausübt. Der Biegedraht oderstreifen 32 besteht hierzu aus einem ausreichend elastischen Material, beispielsweise einem federelastischen Stahl. Durch diese elastische Vorspannung des Biegedrahts oder - streifens 32 spannt er die Manteleinheit 2 gegenüber dem Rückhalteteil 5 bezüglich einer Verschiebung parallel zur Längsachse 4 in Richtung zur Fahrzeugfront vor.

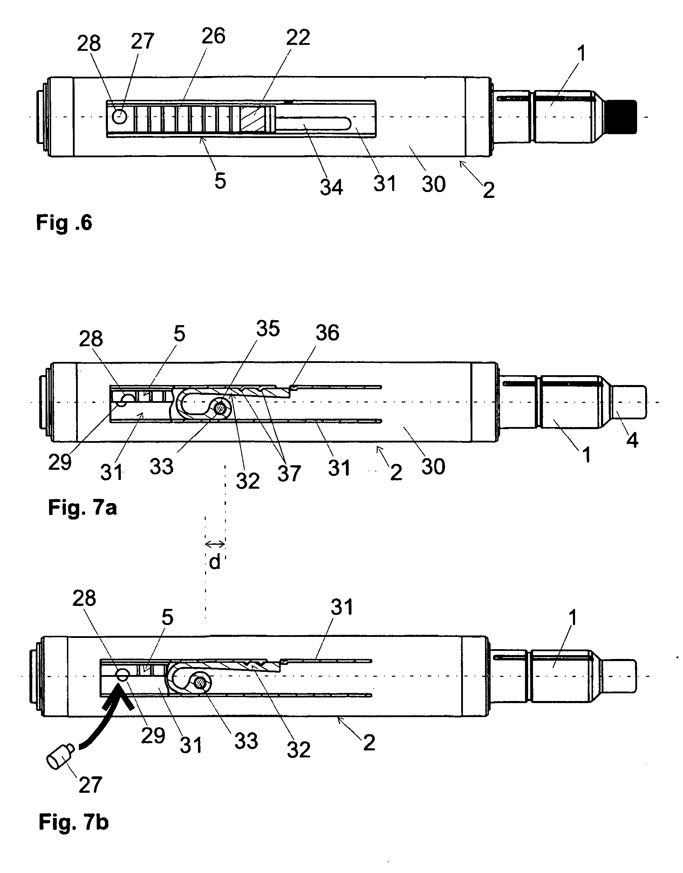

Die Ausbildung dieser Vorspannung ist schematisch in den Fig. 7a und 7b dargestellt. In Fig. 7a weist der Biegedraht oder -streifen seine nicht vorgespannte Neutralstellung auf, die er ohne eine Einwirkung einer äußeren Kraft einnimmt, wobei er mit der Manteleinheit 2 und dem Rückhalteteil 5 verbunden ist. In diesem Fertigungsschritt sind, wie in der Fig. 7a angedeutet, die Öffnung 28 im Rückhalteteil 5 (oberhalb der Längsachse 4 dargestellt) und die Öffnung 29 in der Schiene 31 (unterhalb der Längsachse 4 dargestellt) in Richtung der Längsachse 4 gegeneinander versetzt.

In der Folge wird das Rückhalteteil 5 gegenüber der Manteleinheit 2 parallel zur Längsachse 4 um eine Strecke d in Richtung zur Fahrzeugfront verschoben (nach links in Fig. 7b), wobei der Stift 33 den Biegedraht oder -streifen elastisch vorspannt. In dieser vorgespannten Stellung entsprechend Fig. 7b überdecken die Öffnung 28 im Rückhalteteil 5 (oberhalb der Längsachse 4 dargestellt) und die Öffnung 29 in der Schiene 31 (unterhalb der Längsachse 4 dargestellt) einander und es wird nunmehr der Scherbolzen 27 eingesetzt (was durch den Pfeil in Fig. 7b veranschaulicht ist), wodurch die Losbrechverbindung ausgebildet wird.

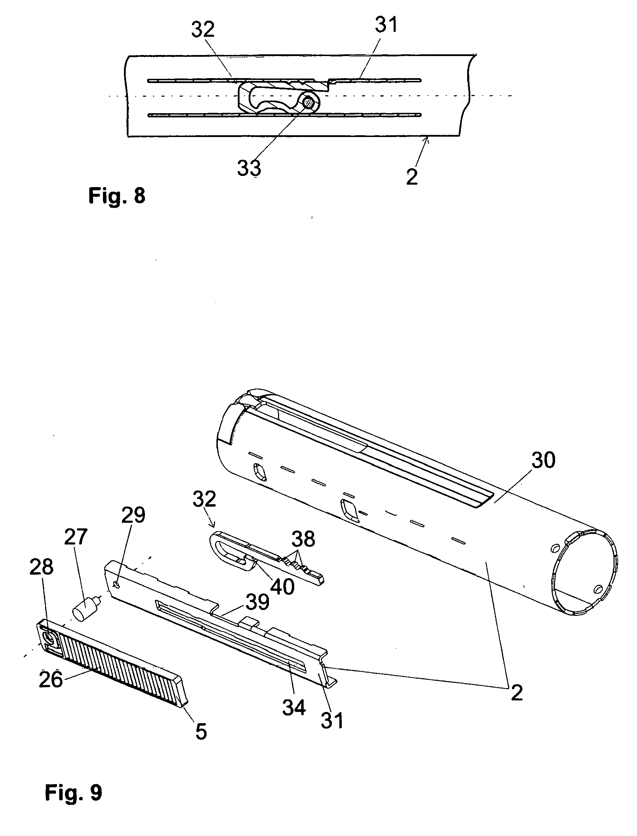

Wenn im Crashfall zumindest eine parallel zur Längsachse 4 in Richtung zur Fahrzeugfront wirkende Kraft auf das lenkradseitige Ende 3 der Lenkwelle 1 ausgeübt wird, insbesondere durch die sekundäre Kollision des Fahrers, so überträgt sich diese Kraft von der Lenkwelle 1 auf die Manteleinheit 2 und addiert sich zur vom Biegedraht oder -streifen 32 ausgeübten Vorspannkraft, und wenn die Summe dieser Kräfte einen Grenzwert überschreitet, wird die Losbrechverbindung durch Abscheren oder Abbrechen des Scherbolzen 27 geöffnet. Damit kann die Verschiebung der Manteleinheit 2 parallel zur Längsachse 4 in Richtung zur Fahrzeugfront einsetzen, also in die vom lenkradseitigen Ende 3 der Lenkwelle 1 weggerichtete Richtung, wobei sich die Manteleinheit 2 gegenüber dem, vom Feststellteil 19 festgehaltenen Rückhalteteil verschiebt. Nach einem ersten Teilabschnitt des Verschiebeweges, der vorzugsweise kleiner als ein Zehntel des gesamten Verschiebeweges zwischen der Manteleinheit 2 und dem Rückhalteteil 5 ist, beginnt der Biegedraht oder-streifen 32 der weiteren Verschiebung eine Kraft entgegenzusetzen, sobald die Neutralstellung des Biegedrahts oder -streifens 32 erreicht bzw. überschritten worden ist. Bei der weiteren Verschiebung wird der Biegedraht oder -streifen 32 unter Energieabsorption verformt, wobei diese Verformung nach einem weiteren Abschnitt des Verschiebeweges, der vorzugsweise kleiner als ein Zehntel des gesamten Verschiebeweges ist, in eine plastische Verformung übergeht. Der Zustand nach dem Fahrzeugcrash ist in Fig. 8 dargestellt.

Zur Auslegung der Energieabsorption, insbesondere in Bezug auf Höhe und Verlauf, kann der Querschnitt und der Querschnittverlauf des Biegestreifens 32 entsprechend dimensioniert werden. Weiter sind die Festigkeit der Verbindung zwischen der Scheine 31 mit der Manteleinheit 2 und die Bleckdicke der Schiene 31 sowie der Verlauf der Breite des Schlitzes 34 in der Schiene 31 wesentlich für das Energieabsorptionsverhalten. Weiter ist der Biegeradius der Schiene 31 in Richtung der Laschen, mit denen die Schiene 31 an der Manteleinheit 2 befestigt ist, ein Einflussparameter zur Festlegung des Energieabsorptionsverhaltens.

Die Feststelleinrichtung kann die Manteleinheit 2 auch zusätzlich zur Halterung durch den Eingriff zwischen dem Feststellteil 19 und dem Rückhalteteil 5, beispielsweise reibschlüssig, gegen eine Verschiebung parallel zur Längsachse 4 halten, z. B. indem beim Schließen der Feststelleinrichtung 7 die Zwischeneinheit 14 gegen die Manteleinheit 2 verspannt wird. Eine solche, von der Feststelleinrichtung 7 direkt auf die Manteleinheit 2 ausgeübte zusätzliche Haltekraft geht in den Grenzwert der Kraft ein, oberhalb von dem es im Crashfall zu einer Verschiebung der Manteleinheit 2 gegenüber der Trageinheit 6 kommt.

Eine zweite Ausführungsform der Erfindung ist in den Figuren 9 bis 11 dargestellt. Der Unterschied zum zuvor beschriebenen Ausführungsbeispiel besteht in der Energieabsorptionsverbindung zwischen der Manteleinheit 2 und dem Rückhalteteil 5. Die Losbrechverbindung ist wie beim zuvor beschriebenen Ausführungsbeispiel durch einen Scherbolzen 27 ausgebildet.

Der eine U-Schenkel des Biegedrahts oder -streifens 32 ist mit der Schiene 31 gegen eine Verschiebung in beide Richtungen parallel zur Längsachse 4 durch Vorsprünge 38 des Biegedrahts oder-streifens 32 gesichert, die in eine Aussparung 39 der Schiene 31 eingreifen. Es könnte auch nur ein in eine Aussparung 39 eingreifender Vorsprung 38 vorgesehen sein. Der andere U-Schenkel besitzt endseitig eine Abbiegung mit einem verdickten Ende 40. Dieses ist in einem Zwischenraum zwischen am Rückhalteteil 5 angeordneten Nasen 41, 42 gehalten, die den Schlitz 34 in der Schiene 31 durchsetzen. Dieser Schenkel des Biegedrahts oder-streifens wird dadurch gegenüber dem Rückhalteteil 5 in beide Richtungen der Längsachse 4 unverschiebbar gehalten.

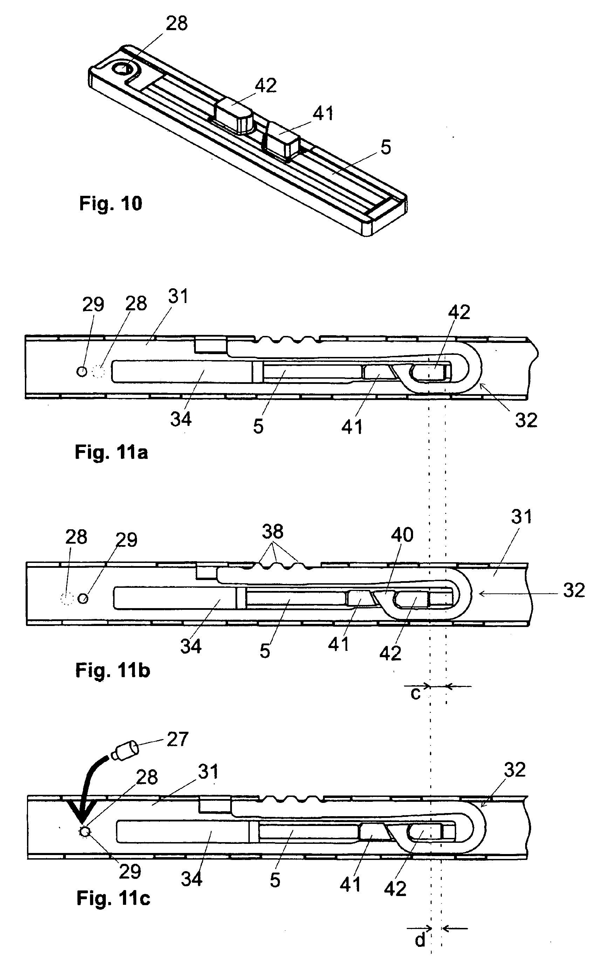

Bei der Montage wird der unverspannte Biegedraht oder -streifen 32 eingesetzt und mit seinen beiden Schenkeln mit dem Rückhalteteil 5 und der Schiene 31 verbunden. In der Folge wird das Rückhalteteil 5 zunächst parallel zur Längsachse 4 um eine Strecke c in Richtung von der Fahrzeugfront weg, also in Richtung zum lenkradseitigen Ende 3 der Lenkwelle 1 (nach links in Fig. 11b) verschoben, siehe die in Fig. 11b im Vergleich zu Fig. 11a ersichtliche Lage. Bei dieser Verschiebung erfolgt eine plastische Verformung des Biegedrahts oder -streifens 32. Herstellungstoleranzen können dadurch ausgeglichen werden, sodass auf diese Weise ein definierter Ausgangszustand erreicht wird. In der Folge erfolgt eine Verschiebung des Rückhalteteils 5 um eine Strecke d parallel zur Längsachse 4 in Richtung zur Fahrzeugfront, also vom lenkradseitigen Ende 3 der Lenkwelle 1 weg (nach rechts in Fig. 11 c), wobei der Biegedraht oder -streifen 32 elastisch vorgespannt wird, siehe Fig. 11c im Vergleich zu Fig. 11b. In dieser Lage überdecken sich die Öffnungen 28, 29 im Rückhalteteil 5 und in der Schiene 31 und der Scherbolzen 27 wird eingesetzt, was durch den Pfeil in Fig. 11c veranschaulicht ist.

Die beschriebene plastische Verformung vor der elastischen Vorspannung könnte auch beim ersten beschriebenen Ausführungsbeispiel durchgeführt werden.

Neben den bereits genannten Vorteilen wirkt sich die erfindungsgemäße Lösung vorteilhaft auf das Geräuschverhalten der Lenksäule aus. Durch die Vorspannung wird ein dämpfender Effekt erreicht.

Die Losbrechverbindung zwischen dem Rückhalteteil 5 und der Manteleinheit 2 könnte auch in anderer Weise als im ersten und zweiten Ausführungsbeispiel beschrieben, ausgebildet sein. Beispielsweise könnte hierzu auch eine den Schlitz 34 verjüngende Nase vorgesehen sein, die vom Stift 33 oder der Nase 41 zum Lösen der Losbrechverbindung überfahren werden müssen. Die Losbrechverbindung legt die Manteleinheit 2 gegenüber dem Rückhalteteil 5 fest und verhindert im Normalbetrieb somit ein Wackeln der Manteleinheit 4 gegenüber dem Rückhalteteil 5.

Auch eine Ausbildung mit mehr als einem Biegedraht oder -streifen 32 ist denkbar und möglich. Hierbei könnte einer der Biegedrähte oder -streifen oder mehr als einer der Biegedrähte oder -streifen in der beschriebenen Weise elastisch vorgespannt sein. Beispielsweise könnten beidseits der Manteleinheit 2 Rückhalteteile 5 vorgesehen sein, die mit Feststellteilen zusammenwirken, beispielsweise in der im Zusammenhang mit dem Feststellteil 19 beschriebenen Art. Beide Rückhalteteile 5 könnten hierbei über eine mindestens einen Biegedraht oder-streifen 32 aufweisende Energieabsorptionsverbindung und über eine Losbrechverbindung mit der Manteleinheit 5 verbunden sein. Auch eine Verbindung von nur einem der Rückhalteteile mit der Manteleinheit durch eine Energieabsorptionsverbindung oder durch eine Losbrechverbindung ist möglich.

Obwohl eine Ausbildung mit auf beiden Seiten der Manteleinheit 2 angeordneten Seitenwangen 10, 11 der Trageinheit 6 bevorzugt ist, gegen welche im geschlossenen Zustand der Feststelleinrichtung 7 Teile der Feststelleinrichtung verspannt werden, sind auch Ausbildungen denkbar und möglich, bei denen die Trageinheit nur eine auf einer Seite der Manteleinheit 2 liegende Seitenwange aufweist.

Eine erfindungsgemäße Lenksäule könnte beispielsweise auch nur in die Längenverstellrichtung 8 verstellbar ausgebildet sein. Bei einer solchen Ausführungsform könnte die Zwischeneinheit 14 entfallen und die vom Spannbolzen 16 durchsetze Öffnung 17, 18 in einer jeweiligen Seitenwange 10, 11 der Trageinheit könnte kreisförmig ausgebildet sein.

Eine sowohl in der Längenverstellrichtung 8 als auch in der Höhen- bzw. Neigungsverstellrichtung 9 verstellbare Lenksäule kann auch ohne eine Zwischeneinheit 14 ausgebildet sein. Hierbei könnten in der Manteleinheit 2 vom Spannbolzen 16 durchsetzte Langlöcher vorhanden sein, die sich in die Längenverstellrichtung 8 der Lenksäule erstrecken. Beispielsweise könnte hierzu am Mantelrohr 30 mindestens ein nach oben oder unten abstehendes Teil angebracht sein, in dem diese Langlöcher angeordnet sind.

Die Manteleinheit 2 kann auch, zumindest über einen Teil ihrer Längserstreckung, umfangsoffen ausgebildet sein.

Falls durch eine reibschlüssige Verbindung eine ausreichend hohe gewünschte Feststellkraft in Richtung der Längenverstellung 8 zwischen dem Rückhalteteil 5 und einem Feststellteil 19 erzielbar ist, so könnte auch ein reibschlüssiger Eingriff zwischen diesen beiden Teilen vorgesehen sein. Zur Erhöhung der Feststellkraft könnten hierbei auch zusätzliche zusammenwirkende Reibflächen vorhanden sein, beispielsweise in Form von zusammenwirkenden Lamellen. Solche zusammenwirkende Lamellen könnten auch zur zusätzlichen Feststellung in die Höhen- bzw. Neigungsverstellrichtung 9 vorgesehen sein.

Die Trageinheit 1 könnte auch in Richtung parallel zur Längsachse 4 im Crashfall unter Energieabsorption verschiebbar mit einem fahrzeugfest verbundenen Montageteil verbunden sein, wie dies bekannt ist.

Für den Fall, dass eine Energieabsorption in eine Richtung, die nicht mit der Längsrichtung der Lenksäule (=Richtung der Längsachse 4) zusammenfällt, erforderlich ist, kann die erfindungsgemäße Einrichtung auch in diese Richtung ausgerichtet werden. Die Vorspannung würde dann entsprechend in diese Richtung in den einen oder die mehreren Biegedrähte oder -streifen 32 eingebracht werden. Entsprechend der veranschaulichten Beispiele würde die Schiene 31 entsprechend in diese Richtung ausgerichtet an der Manteleinheit befestigt sein.

**Legende**

| | | | |
|---|---|---|---|
| zu den Hinweisziffern: | | | |
| 1 | Lenkwelle | 31 | Schiene |
| 2 | Manteleinheit | 32 | Biegedraht oder -streifen |
| 3 | lenkradseitiges Ende | 33 | Stift |
| 4 | Längsachse | 34 | Schlitz |
| 5 | Rückhalteteil | 35 | Öse |
| 6 | Trageinheit | 36 | Anschlag |
| 7 | Feststelleinrichtung | 37 | Fortsatz |
| 8 | Längenverstellrichtung | 38 | Vorsprung |
| 9 | Höhen- bzw. Neigungsverstellrichtung | 39 | Aussparung |
| 10 | Seitenwange | 40 | Ende |
| 11 | Seitenwange | 41 | Nase |
| 12 | Seitenschenkel | 42 | Nase |
| 13 | Seitenschenkel | | |
| 14 | Zwischeneinheit | | |
| 15 | Schwenkachse | | |
| 16 | Spannbolzen | | |
| 17 | Öffnung | | |
| 18 | Öffnung | | |
| 19 | Feststellteil | | |
| 20 | Feststellteil | | |
| 21 | Verbindungsabschnitt | | |
| 22 | Abschnitt | | |
| 23 | Spannhebel | | |
| 24 | Nockenscheibe | | |
| 25 | Verzahnung | | |
| 26 | Verzahnung | | |
| 27 | Scherbolzen | | |
| 28 | Öffnung | | |
| 29 | Öffnung | | |
| 30 | Mantelrohr | | |

## Patentansprüche

1. Lenksäule für ein Kraftfahrzeug, welche eine Manteleinheit (2), die eine Lenkwelle (1) um ihre Längsachse (4) drehbar lagert und ein Rückhalteteil (5) umfasst, gegenüber dem die Manteleinheit (2) bis zu einem Grenzwert einer parallel zur Längsachse (4) der Lenkwelle (1) in Richtung zur Fahrzeugfront auf die Manteleinheit (2) einwirkenden Kraft (F) unverschiebbar gehalten ist und bei einem Überschreiten des Grenzwertes parallel zur Längsachse (4) in Richtung zur Fahrzeugfront verschiebbar ist, wobei die Manteleinheit (2) mit dem Rückhalteteil (5) zum Einen über eine Energieabsorptionsverbindung; die mindestens einen Biegedraht oder streifen (32) umfasst, der bei einer parallel zur Längsachse (4) in Richtung zur Fahrzeugfront erfolgenden Verschiebung der Manteleinheit (2) gegenüber dem Rückhalteteil (5) verformt wird, und zum Anderen über eine Losbrechverbindung verbunden ist, die bis zum Grenzwert der Kraft (F) geschlossen ist und eine Verschiebung der Manteleinheit (2) gegenüber dem Rückhalteteil (5) blockiert und sich bei Überschreiten des Grenzwertes der Kraft öffnet, **dadurch gekennzeichnet, dass** für den Fall, dass die Losbrechverbindung zwischen der Manteleinheit (2) und dem Rückhalteteil (5) geschlossen ist, der Biegedraht oder - streifen (32) oder mindestens einer der Biegedrähte oder -streifen (32) elastisch verformt ist und die Manteleinheit (2) gegenüber dem Rückhalteteil (5) bezüglich einer Verschiebung parallel zur Längsachse (4) der Lenkwelle (1) in Richtung zur Fahrzeugfront vorspannt.

2. Lenksäule nach Anspruch 1, **dadurch gekennzeichnet, dass** die Lenksäule zumindest längenverstellbar ausgebildet ist, wobei im geöffneten Zustand einer Feststelleinrichtung (7) die Manteleinheit (2) gegenüber einer die Manteleinheit (2) tragenden Trageinheit (6) parallel zur Längsachse (4) der Lenkwelle (1) verstellbar ist und die Feststelleinrichtung im geschossenen Zustand eine Feststellkraft zur Feststellung der Manteleinheit (2) gegenüber der Trageinheit (6) bezüglich einer Verschiebung parallel zur Längsachse (4) aufbringt.

3. Lenksäule nach Anspruch 2, **dadurch gekennzeichnet, dass** die Feststelleinrichtung (7) ein Feststellteil (19) aufweist, welches im geschlossenen Zustand der Feststelleinrichtung (7) zur Aufbringung zumindest eines Teils der Feststellkraft in Eingriff mit dem Rückhalteteil (5) steht und im geöffneten Zustand der Feststelleinrichtung (7) außer Eingriff mit dem Rückhalteteil (5) ist, und dass das Feststellteil (19) gegenüber der Trageinheit (6) in Richtung der Längsachse (4) der Lenkwelle (1) unverschiebbar gehalten ist.

4. Lenksäule nach Anspruch 3, **dadurch gekennzeichnet, dass** die Feststelleinrichtung (7) einen Spannbolzen (16) aufweist, in dessen Längsrichtung das Feststellteil (19) beim Schließen und Öffnen der Feststelleinrichtung (7) zum in und außer Eingriff Bringen mit dem Rückhalteteil (5) verschoben wird.

5. Lenksäule nach Anspruch 4, **dadurch gekennzeichnet, dass** die Trageinheit (6) beidseitig der Manteleinheit (2) liegende Seitenwangen (10,11) aufweist, die vom Spannbolzen (16) der Feststelleinrichtung (7) durch Öffnungen (17,18) durchsetzt werden, und das Feststellteil (19) eine der Seitenwangen (10, 11) der Trageinheit (6) und/oder einen Seitenschenkel (12) einer Zwischeneinheit (14), die zwischen den Seitenwangen (10, 11) der Trageinheit (6) und der Manteleinheit (2) angeordnet ist, durch eine Öffnung durchsetzt und von den Rändern der Öffnung der Seitenwange (10, 11) der Trageinheit (6) und/oder von den Rändern der Öffnung des Seitenschenkels (12) der Zwischeneinheit (14) in Richtung der Längsachse (4) der Lenkwelle (1) unverschiebbar gehalten ist.

6. Lenksäule nach Anspruch 5, **dadurch gekennzeichnet, dass** die Zwischeneinheit (14) gegenüber der Trageinheit (6) in Richtung der Längsachse (4) der Lenkwelle (1) unverschiebbar ist, aber im geöffneten Zustand der Feststelleinrichtung (7) zur Höhen- oder Neigungsverstellung der Lenksäule um eine rechtwinklig zur Längsachse (4) der Lenkwelle (1) stehende Schwenkachse (15) gegenüber der Trageinheit (6) verschwenkbar ist.

7. Lenksäule nach Anspruch 5 oder 6, **dadurch gekennzeichnet, dass** die Manteleinheit (2) von der Tageinheit (6) oder der Zwischeneinheit (14) parallel zur Längsachse (4) der Lenkwelle (1) verschiebbar geführt ist.

8. Lenksäule nach einem der Ansprüche 3 bis 7, **dadurch gekennzeichnet, dass** das Rückhalteteil (5) und das Feststellteil (19) zusammenwirkende Eingriffselemente aufweisen, vorzugsweise zusammenwirkende Verzahnungen (25, 26) die im geschlossenen Zustand der Feststelleinrichtung (7) einer gegenseitigen Verschiebung in Richtung der Längsachse (4) der Lenkwelle (1) formschlüssig entgegenwirken.

9. Lenksäule nach einem der Ansprüche 1 bis 8, **dadurch gekennzeichnet, dass** die Losbrechverbindung zwischen dem Rückhalteteil (5) und der Manteleinheit (2) durch eine formschlüssige Verbindung ausgebildet ist, die bei Überschreitung des Grenzwertes der Kraft durch Materialumformung, Materialabscherung oder Bruch geöffnet wird.

10. Verfahren zur Herstellung einer Lenksäule für ein Kraftfahrzeug, welche eine Manteleinheit (2), die eine Lenkwelle (1) um ihre Längsachse (4) drehbar lagert und ein Rückhalteteil (5) umfasst, gegenüber dem die Manteleinheit (2) bis zu einem Grenzwert einer parallel zur Längsachse (4) der Lenkwelle (1) in Richtung zur Fahrzeugfront auf die Manteleinheit (2) einwirkenden Kraft (F) unverschiebbar gehalten ist und bei einem Überschreiten des Grenzwertes parallel zur Längsachse (4) in Richtung zur Fahrzeugfront verschiebbar ist, wobei die Manteleinheit (2) mit dem Rückhalteteil (5) zum Einen über eine Energieabsorptionsverbindung, die mindestens einen Biegedraht oder streifen (32) umfasst, der bei einer parallel zur Längsachse (4) in Richtung zur Fahrzeugfront erfolgenden Verschiebung der Manteleinheit (2) gegenüber dem Rückhalteteil (5) verformt wird, und zum Anderen über eine Losbrechverbindung verbunden ist, die bis zum Grenzwert der Kraft (F) geschlossen ist und eine Verschiebung der Manteleinheit (2) gegenüber dem Rückhalteteil (5) blockiert und sich bei Überschreiten des Grenzwertes der Kraft (F) öffnet, **dadurch gekennzeichnet, dass** vor Ausbildung der Losbrechverbindung zwischen dem Rückhalteteil (5) und der Manteleinheit (2) der Biegedraht oder -streifen (32) oder mindestens einer der Biegedrähte oder -streifen (32) durch eine elastische Verformung vorgespannt wird, wobei er eine die Manteleinheit (2) gegenüber dem Rückhalteteil (5) bezüglich einer Verschiebung parallel zur Längsachse (4) der Lenkwelle (1) in Richtung zur Fahrzeugfront vorspannende Rückstellkraft ausübt, und in der Folge unter Beibehaltung der Vorspannung des Biegedrahtes oder-streifens (32) die Losbrechverbindung zwischen dem Rückhalteteil (5) und der Manteleinheit (2) ausgebildet wird.

11. Verfahren nach Anspruch 10, **dadurch gekennzeichnet, dass** der mit der Manteleinheit (2) und dem Rückhalteteil (5) verbundene Biegedraht oder-streifen (32) durch eine Verschiebung des Rückhalteteils (5) gegenüber der Manteleinheit (2) parallel zur Längsachse (4) der Lenkwelle (1) in Richtung zur Fahrzeugfront vorgespannt wird.

12. Verfahren nach Anspruch 11, **dadurch gekennzeichnet, dass** vor der Vorspannung des Biegedrahts oder -streifens (32) der Biegedraht oder -streifen (32) plastisch verformt wird, indem das Rückhalteteil (5) gegenüber der Manteleinheit (2) parallel zur Längsachse (4) des Rückhalteteils (5) in Richtung von der Fahrzeugfront weg verschoben wird.

## Claims

1. Steering column for a motor vehicle, the steering column comprising a jacket unit (2), supporting a steering shaft (1) rotatably about its longitudinal axis (4), and a retaining part (5), with respect to which the jacket unit (2) up to a limit value of a force (F), acting parallel to the longitudinal axis (4) of the steering shaft (1) in the direction towards the vehicle front on the jacket unit (2), is held nondisplaceably and, if the limit value is exceeded, is displaceable parallel to the longitudinal axis (4) in the direction towards the vehicle front, wherein the jacket unit (2) is connected with the retaining part (5), on the one hand, via an energy absorption connection which comprises at least one bending wire or strip (32) which, upon a displacement of the jacket unit (2) with respect to the retaining part (5) parallel to the longitudinal axis (4) in the direction towards the vehicle front, is deformed and, on the other hand, via a break-away connection which, up to the limit value of the force (F), is closed and blocks a displacement of the jacket unit (2) with respect to the retaining part (5) and, if the limit value of the force is exceeded, is released, **characterised in that**, for the case where the break-away connection is closed, between the jacket unit (2) and the retaining part (5), the bending wire or strip (32) or at least one of the bending wires or strips (32), is elastically deformed and prestresses the jacket unit (2) with respect to the retaining part (5) relative to a displacement parallel to the longitudinal axis (4) of the steering shaft (1) in the direction towards the vehicle front.

2. Steering column according to Claim 1, **characterised in that** the steering column is formed such that it is at least length adjustable, wherein in the opened state of a securing device (7) the jacket unit (2) is displaceable with respect to a carrying unit (6) carrying the jacket unit (2) parallel to the longitudinal axis (4) of the steering shaft (1) and the securing device in the closed state applies a securing force for securing in position the jacket unit (2) with respect to the carrying unit (6) relative to a displacement parallel to the longitudinal axis (4).

3. Steering column according to Claim 2, **characterised in that** the securing device (7) comprises a securing part (19) which, in the closed state of the securing device (7), for the application of least a portion of the securing force, is in engagement with the retaining part (5) and, in the opened state of the securing device (7), is out of engagement with the retaining part (5), and **in that** the securing part (19) is held with respect to the carrying unit (6) nondisplaceably in the direction of the longitudinal axis (4) of the steering shaft (1).

4. Steering column according to Claim 3, **characterised in that** the securing device (7) comprises a clamp bolt (16), in the longitudinal direction of which the securing part (19) during the closing and opening of the securing device (7) is shifted for the movement into and out of engagement with the retaining part (5).

5. Steering column according to Claim 4, **characterised in that** the carrying unit (6) comprises side cheeks (10, 11) located on both sides of the jacket unit (2), the side cheeks (10, 11) being penetrated by the clamp bolt (16) of the securing device (7) through openings (17, 18), and the securing part (19) penetrates one of the side cheeks (10, 11) of the carrying unit (6) and/or a side flank (12) of an intermediate unit (14), disposed between the side cheeks (10, 11) of the carrying unit (6), and the jacket unit (2), through an opening, and is held by the margins of the opening of the side cheek (10, 11) of the carrying unit (6) and/or by the margins of the opening of the side flank (12) of the intermediate unit (14) nondisplaceably in the direction of the longitudinal axis (4) of the steering shaft (1).

6. Steering column according to Claim 5, **characterised in that** the intermediate unit (14) is nondisplaceable with respect to the carrying unit (6) in the direction of the longitudinal axis (4) of the steering shaft (1), but is swivellable in the opened state of the securing device (7) with respect to the carrying unit (6) about a swivel axis (15) at right angles to the longitudinal axis (4) of the steering shaft (1) for height or inclination adjustment of the steering column.

7. Steering column according to Claim 5 or 6, **characterised in that** the jacket unit (2) is guided by the carrying unit (6) or the intermediate unit (14) such that it is displaceable parallel to the longitudinal axis (4) of the steering shaft (1).

8. Steering column according to one of Claims 3 to 7, **characterised in that** the retaining part (5) and the securing part (19) comprise cooperating engaging elements, preferably cooperating toothings (25, 26), which, in the closed state of the securing device (7), counteract under form closure a mutual displacement in the direction of the longitudinal axis (4) of the steering shaft (1).

9. Steering column according to one of Claims 1 to 8, **characterised in that** the break-away connection between the retaining part (5) and the jacket unit (2) is formed by a form closure connection which, if the limit value of the force is exceeded, is released through material reforming, material shearing, or fracture.

10. Method for producing a steering column for a motor vehicle, the steering column comprising a jacket unit (2), supporting a steering shaft (1) rotatably about its longitudinal axis (4), and a retaining part (5), with respect to which the jacket unit (2) up to a limit value of a force (F), acting parallel to the longitudinal axis (4) of the steering shaft (1) in the direction towards the vehicle front on the jacket unit (2), is held nondisplaceably and, if the limit value is exceeded, is displaceable parallel to the longitudinal axis (4) in the direction towards the vehicle front, wherein the jacket unit (2) is connected with the retaining part (5), on the one hand, via an energy absorption connection which comprises at least one bending wire or strip (32) which, upon a displacement of the jacket unit (2) parallel to the longitudinal axis (4) in the direction towards the vehicle front with respect to the retaining part (5), is deformed and, on the other hand, via a break-away connection which, up to the limit value of the force (F), is closed and blocks a displacement of the jacket unit (2) with respect to the retaining part (5) and, if the limit value of the force (F) is exceeded, is released, **characterised in that**, before the formation of the break-away connection between the retaining part (5) and the jacket unit (2), the bending wire or strip (32) or at least one of the bending wires or strips (32) is prestressed through elastic deformation whereby it exerts a restoring force prestressing the jacket unit (2) with respect to the retaining part (5) relative to a displacement parallel to the longitudinal axis (4) of the steering shaft (1) in the direction towards the vehicle front, and, subsequently, while maintaining the prestress of the bending wire or strip (32), the break-away connection between the retaining part (5) and the jacket unit (2) is formed.

11. Method according to Claim 10, **characterised in that** the bending wire or strip (32) connected with the jacket unit (2) and the retaining part (5) is prestressed through a displacement of the retaining part (5) with respect to the jacket unit (2) parallel to the longitudinal axis (4) of the steering shaft (1) in the direction towards the vehicle front.

12. Method according to Claim 11, **characterised in that**, before the prestressing of the bending wire or strip (32), the bending wire or strip (32) is plastically deformed by displacing the retaining part (5) with respect to the jacket unit (2) parallel to the longitudinal axis (4) of the retaining part (5) in the direction away from the vehicle front.

## Revendications

1. Colonne de direction pour un véhicule à moteur, laquelle comporte une unité de gainage (2) qui supporte un arbre de direction (1) pouvant tourner autour de son axe longitudinal (4) et une pièce de retenue (5) par rapport à laquelle l'unité de gainage (2) est retenue de manière non déplaçable jusqu'à une valeur limite d'une force (F) agissant sur l'unité de gainage (2) parallèlement à l'axe longitudinal (4) de l'arbre de direction (1) en direction de l'avant du véhicule et peut être déplacée en direction de l'avant du véhicule parallèlement à l'axe longitudinal (4) lors d'un dépassement de la valeur limite, l'unité de gainage (2) étant reliée à la pièce de retenue (5), d'une part, par une liaison à absorption d'énergie qui comporte au moins une tige ou bande de flexion (32) qui est déformée par rapport à la pièce de retenue (5) lors d'un déplacement de l'unité de gainage (2) survenant parallèlement à l'axe longitudinal (4) en direction de l'avant du véhicule et, d'autre part, par une liaison desserrable qui est fermée jusqu'à la valeur limite de la force (F) et bloque un déplacement de l'unité de gainage (2) par rapport à la pièce de retenue (5) et s'ouvre lors du dépassement de la valeur limite de la force,
**caractérisée en ce que**, dans le cas où la liaison desserrable entre l'unité de gainage (2) et la pièce de retenue (5) est fermée, la tige ou bande de flexion (32), ou au moins l'une des tiges ou bandes de flexion (32), est élastiquement déformée entre l'unité de gainage (2) et la pièce de retenue (5) et précontraint l'unité de gainage (2) par rapport à la pièce de retenue (5) en ce qui concerne un déplacement de l'arbre de direction (1) parallèlement à l'axe longitudinal (4) en direction de l'avant du véhicule.

2. Colonne de direction selon la revendication 1, **caractérisée en ce que** la colonne de direction peut se déplacer dans le sens longitudinal, alors que, lorsqu'un dispositif d'immobilisation (7) est fermé, l'unité de gainage (2) peut se déplacer par rapport à une unité support (6), portant l'unité de gainage (2), parallèlement à l'axe longitudinal (4) de l'arbre de direction (1) et le dispositif d'immobilisation produit, lorsqu'il est fermé, une force d'immobilisation permettant l'immobilisation de l'unité de gainage (2) par rapport à une unité support (6) en ce qui concerne un déplacement parallèlement à l'axe longitudinal (4).

3. Colonne de direction selon la revendication 2, **caractérisée en ce que** le dispositif d'immobilisation (7) possède une pièce d'immobilisation (19) qui, lorsque le dispositif d'immobilisation (7) est fermé, est en prise avec la pièce de retenue (5) pour produire au moins une partie de la force d'immobilisation et, lorsque le dispositif d'immobilisation (7) est ouvert, n'est pas en prise avec la pièce de retenue (5), et la pièce d'immobilisation (19) est retenue de manière non déplaçable par rapport à l'unité support (6) en direction de l'axe longitudinal (4) de l'arbre de direction (1).

4. Colonne de direction selon la revendication 3, **caractérisée en ce que** l'unité d'immobilisation (7) possède un boulon de serrage (16) dans le sens longitudinal duquel la pièce d'immobilisation (19) est déplacée lors de la fermeture et de l'ouverture du dispositif d'immobilisation (7) pour l'engrènement et le désengrènement avec la pièce de retenue (5).

5. Colonne de direction selon la revendication 4,
**caractérisée en ce que** l'unité support (6) présente des flasques latéraux (10, 11) situés des deux côtés de l'unité de gainage (2), lesquels flasques sont traversés par le boulon de serrage (16) du dispositif d'immobilisation (7) par des ouvertures (17, 18) et la pièce d'immobilisation (19) traverse l'un des flasques latéraux (10, 11) de l'unité support (6) et/ou une branche latérale (12) d'une unité intermédiaire (14), disposée entre les flasques latéraux (10, 11) de l'unité support (6) et de l'unité de gainage (2), à travers une ouverture et est retenue de manière non déplaçable par les bords de l'ouverture du flasque latéral (10, 11) de l'unité support (6) et/ou par les bords de l'ouverture de la branche latérale (12) de l'unité intermédiaire (14) en direction de l'axe longitudinal (4) de l'arbre de direction (1).

6. Colonne de direction selon la revendication 5,
**caractérisée en ce que** l'unité intermédiaire (14) est non déplaçable par rapport à l'unité support (6) en direction de l'axe longitudinal (4) de l'arbre de direction (1) mais peut pivoter par rapport à l'unité support (6), lorsque le dispositif d'immobilisation (7) est ouvert, autour d'un axe de pivotement (15) perpendiculaire à l'axe longitudinal (4) de l'arbre de direction (1) afin de déplacer la colonne de direction en hauteur ou en inclinaison.

7. Colonne de direction selon la revendication 5 ou la revendication 6,
**caractérisée en ce que** l'unité de gainage (2) de l'unité support (6) ou de l'unité intermédiaire (14) peut se déplacer parallèlement à l'axe longitudinal (4) de l'arbre de direction (1).

8. Colonne de direction selon l'une quelconque des revendications 3 à 7,
**caractérisée en ce que** la pièce de retenue (5) et la pièce d'immobilisation (19) présentent des éléments d'engrènement qui coopèrent entre eux, de préférence des dentures (25, 26) qui coopèrent entre elles et qui réagissent, par concordance de forme, à un déplacement réciproque en direction de l'axe longitudinal (4) de l'arbre de direction (1) lorsque le dispositif d'immobilisation (7) est fermé.

9. Colonne de direction selon l'une quelconque des revendications 1 à 8,
**caractérisée en ce que** la liaison desserrable entre la pièce de retenue (5) et la pièce de gainage (2) est conçue comme une liaison par concordance de forme qui s'ouvre en cas de dépassement de la valeur limite de la force du fait d'une déformation de la matière, d'un cisaillement de la matière ou d'une rupture.

10. Procédé de fabrication d'une colonne de direction pour un véhicule à moteur, laquelle comporte une unité de gainage (2) qui supporte un arbre de direction (1) pouvant tourner autour de son axe longitudinal (4) et une pièce de retenue (5) par rapport à laquelle l'unité de gainage (2) est retenue de manière non déplaçable jusqu'à une valeur limite d'une force (F) agissant sur l'unité de gainage (2) parallèlement à l'axe longitudinal (4) de l'arbre de direction (1) en direction de l'avant du véhicule et peut être déplacée en direction de l'avant du véhicule parallèlement à l'axe longitudinal (4) lors d'un dépassement de la valeur limite, l'unité de gainage (2) étant reliée à la pièce de retenue (5), d'une part, par une liaison à absorption d'énergie qui comporte au moins une tige ou bande de flexion (32) qui est déformée par rapport à la pièce de retenue (5) lors d'un déplacement de l'unité de gainage (2) survenant parallèlement à l'axe longitudinal (4) en direction de l'avant du véhicule et, d'autre part, par une liaison desserrable qui est fermée jusqu'à la valeur limite de la force (F) et bloque un déplacement de l'unité de gainage (2) par rapport à la pièce de retenue (5) et s'ouvre lors du dépassement de la valeur limite de la force (F),
**caractérisé en ce que**, avant la formation de la liaison desserrable entre la pièce de retenue (5) et la pièce de gainage (2), la tige ou bande de flexion (32), ou au moins l'une de tiges ou bandes de flexion (32), est précontrainte par une déformation élastique, laquelle tige ou bande de flexion exerce une force de rappel qui précontraint l'unité de gainage (2) par rapport à la pièce de retenue (5) en ce qui concerne un déplacement de l'arbre de direction parallèlement à l'axe longitudinal en direction de l'avant du véhicule et, par suite, la liaison desserrable est formée entre la pièce de retenue (5) et l'unité de gainage (2) en maintenant la précontrainte de la tige ou de la bande de flexion (32).

11. Procédé selon la revendication 10,
**caractérisé en ce que** la tige ou la bande de flexion (32), reliée à l'unité de gainage (2) et à la pièce de retenue (5), est précontrainte par un déplacement de la pièce de retenue (5) par rapport à l'unité de gainage (2) parallèlement à l'axe longitudinal (4) de l'arbre de direction (1) en direction de l'avant du véhicule.

12. Procédé selon la revendication 11,
**caractérisé en ce que**, avant la précontrainte de la tige ou de la bande de flexion (32), la tige ou la bande de flexion (32) est déformée plastiquement du fait de l'éloignement la pièce de retenue (5), par rapport à l'unité de gainage (2), parallèlement à l'axe longitudinal (4) de la pièce de retenue (5) en direction de l'avant du véhicule.
